Europäisches Patentamt

European Patent Office

Office européen des brevets

(11) Veröffentlichungsnummer: **0 214 456**
**A1**

## (12) EUROPÄISCHE PATENTANMELDUNG

(21) Anmeldenummer: 86110684.7

(22) Anmeldetag: 01.08.86

(51) Int. Cl.⁴: **H04M 11/06**

(30) Priorität: 21.08.85 DE 3529939

(43) Veröffentlichungstag der Anmeldung:
18.03.87 Patentblatt 87/12

(84) Benannte Vertragsstaaten:
AT BE CH DE FR GB IT LI NL SE

(71) Anmelder: **Siemens Aktiengesellschaft Berlin und München**
**Wittelsbacherplatz 2**
**D-8000 München 2(DE)**

(72) Erfinder: **Dieter, Georg, Dipl.-Ing.**
**Reichertshausen 1**
**D-8195 Egling 2(DE)**
Erfinder: **Hieninger, Johann, Dipl.-Ing.(FH)**
**Höllentalstrasse 13**
**D-8000 München 70(DE)**

(54) Schaltungsanordnung zum Anschliessen eines Datengerätes an eine mit einer Fernsprecheinrichtung verbundene Übertragungsleitung.

(57) An einer mit einer Fernsprecheinrichtung (Tel) über ein Tiefpaßfilter (TP) verbundenen Übertragungsleitung (La', Lb'), über die Fernsprechsignale in einem ersten Frequenzbereich übertragen werden, ist über einen Leitungsübertrager (Ü3) ein Datengerät (DG) angeschlossen, welches Datensignale in einem zweiten, oberhalb des ersten Frequenzbereiches liegenden Frequenzbereich aufzunehmen bzw. abzugeben vermag. Das Tiefpaßfilter - (TP) weist auf seiner der Übertragungsleitung (La', Lb') zugewandten Seite einen kapazitiven Abschluß - (C7) auf, der so bemessen ist, daß dessen Wechselstromwiderstand in der Größenordnung des Wellenwiderstandes des Datengeräts in dem zweiten Frequenzbereich liegt, vorzugsweise jedoch kleiner ist als dieser Wellenwiderstand.

FIG 1

EP 0 214 456 A1

Xerox Copy Centre

## Schaltungsanordnung zum Anschließen eines Datengerätes an eine mit einer Fernsprecheinrichtung verbundene Übertragungsleitung

Die Erfindung bezieht sich auf eine Schaltungsanordnung, wie sie im Oberbegriff des Anspruchs 1 angegeben ist.

Es sind bereits Schaltungsanordnungen zum Anschließen von Datengeräten an mit Fernsprecheinrichtungen verbundene Übertragungsleitungen bekannt (EP-A2-0 146 894). Bei diesen bekannten Schaltungsanordnungen sind die Datengeräte mit ihren Datensignale abgebenden und aufnehmenden Geräteteilen entweder über Bandpaßfilter oder über gesonderte Schalteinrichtungen bzw. Multiplexer und Demultiplexer an Fernsprechleitungen angeschlossen. Der damit verbundene schaltungstechnische Aufwand ist somit in jedem Falle relativ hoch.

Es sind ferner Schaltungsanordnungen zum Anschließen von Datensignale abgebenden und aufnehmenden Datengeräten an mit Fernsprecheinrichtungen verbundene Übertragungsleitungen bekannt (EP-A2-0 062 442; US-PS 4 443 662), die jeweils ein Filter mit einem vorbestimmten Durchlaßbereich umfassen, um Signale im Durchlaßbereich in die jeweiligen Übertragungsleitungen ein-oder aus diesen auszukoppeln. Ferner weisen die bekannten Schaltungsanordnungen jeweils einen Übertrager mit wenigstens einer ersten und wenigstens einer zweiten Wicklung auf. Das Filter - schließt eine über die zumindest zweite Wicklung mit der Übertragungsleitung verbundene Parallelkapazität ein. Mit der wenigstens einen ersten Wicklung des jeweiligen Übertragers ist in Reihe eine Induktivität verbunden, die mit der Kapazität, so wie sie durch den Übertrager abgebildet ist, einen Reihenschwingkreis mit einer vorbestimmten Resonanzfrequenz außerhalb des Durchlaßbereiches bildet, wobei Signale im wesentlichen bei der vorbestimmten Resonanzfrequenz über die Induktivität und den Übertrager in die Zweidrahtleitung ein-oder aus dieser ausgekoppelt werden. Dies bedeutet, daß bei den zuletzt betrachtetn bekannten Schaltungsanordnungen je Datengerät und im speziellen sogar je Einkoppelungs-und Auskoppelungsrichtung jeweils ein Reihenschwingkreis gebildet ist. Damit ist aber auch bei diesen bekannten Schaltungsanordnungen insgesamt ein relativ hoher schaltungstechnischer Aufwand vorhanden.

Der Erfindung liegt die Aufgabe zugrunde, eine Schaltungsanordnung der im Oberbegriff des Anspruchs 1 angegebenen Art so auszubilden, daß bei geringerem schaltungstechnischen Aufwand als bei den bisher bekannten Schaltungsanordnungen ausgekommen werden kann und daß zugleich mit einer relativ geringen Signaldämpfung in den einzelnen Signalübertragungswegen gearbeitet werden kann.

Gelöst wird die vorstehend aufgezeigte Aufgabe durch die im Anspruch 1 gekennzeichneten Maßnahmen.

Die Erfindung bringt den Vorteil mit sich, daß mit insgesamt relativ geringem schaltungstechnischen Aufwand sichergestellt ist, daß die Signalbedämpfung in der Übertragungsleitung nur relativ gering ist. So läßt sich eine Schaltungsanordnung gemäß der Erfindung realisieren, bei der die Signalbedämpfung in der Übertragungsleitung beispielsweise nur 0,01 dB beträgt, während im Vergleich dazu bei üblichen Schaltungsanordnungen, die mit eineinander parallel geschalteten Tiefpaß- bzw. Hochpaß-oder Bandpaßfiltern zur Signaltrennung ausgestattet sind, ein Wert von 0,33 dB als Mittelwert erzielbar ist.

Zweckmäßigerweise ist der Leitungsübertrager als symmetrischer Leitungsübertrager ausgebildet. Dies bringt den Vorteil eines besonders einfachen Schaltungsaufbaus hinsichtlich der symmetrischen Leitungsbelastung mit sich.

Vorzugsweise ist der Leitungsübertrager als Teil einer Gabelschaltung ausgebildet, mit der ein Datensignalsender und ein Datensignalempfänger des Datengerätes verbunden sind. Hierdurch ergibt sich der Vorteil eines relativ geringen - schaltungstechnischen Aufwands für einen störungsfreien Betrieb von Datensignalsender und Datensignalempfänger des Datengeräts.

Gemäß einer zweckmäßigen Weiterbildung der Erfindung kann mit zumindest einem Teil des kapazitiven Abschlusses des Tiefpaßfilters eine Induktanz in Reihe geschaltet sein. Von dieser Maßnahme kann man in vorteilhafter Weise dann Gebrauch machen, wenn die Ausgangsimpedanz des Tiefpaßfilters zur Erzielung einer verbesserten Datenübertragung noch weiter zu verringern ist.

Vorzugsweise ist der genannten Induktanz eine ohmsche Widerstandsanordnung parallel geschaltet. Hierdurch ergibt sich der Vorteil, daß dem aus der genannten Induktanz und dem kapazitiven Abschluß bestehenden Serienresonanzkreis die jeweils gewünschte Breitbandigkeit gegeben werden kann.

Eine andere zweckmäßige Weiterbildung der vorliegenden Erfindung besteht darin, daß der in der jeweiligen Übertragungsleitungsader liegenden Wicklung des Leitungsübertragers ein Reihenschwingkreis parallel geschaltet ist, der auf eine Frequenz abgestimmt ist, mit der zur Fernsprecheinrichtung hin bzw. von dieser weg zu übertragende Sondersignale auftreten. Von dieser Maßnahme wird man in vorteilhafter Weise dann Gebrauch machen, wenn neben den Fernsprechsignalen zusätzliche Signale zu bzw. von der Fernsprecheinrichtung zu übertragen sind, wie beispielsweise 16-kHz-Gebührenzählsignale.

Anhand von Zeichnungen wird die Erfindung nachstehend beispielsweise näher erläutert.

FIG 1 zeigt in einem Blockdiagramm eine Schaltungsanordnung gemäß der Erfindung.

FIG 2 zeigt in einem Ausschnitt eine Modifikation der in FIG 1 dargestellten Schaltungsanordnung gemäß der Erfindung.

FIG 3 zeigt eine weitere Modifikation der in FIG 1 dargestellten Schaltungsanordnung gemäß der Erfindung.

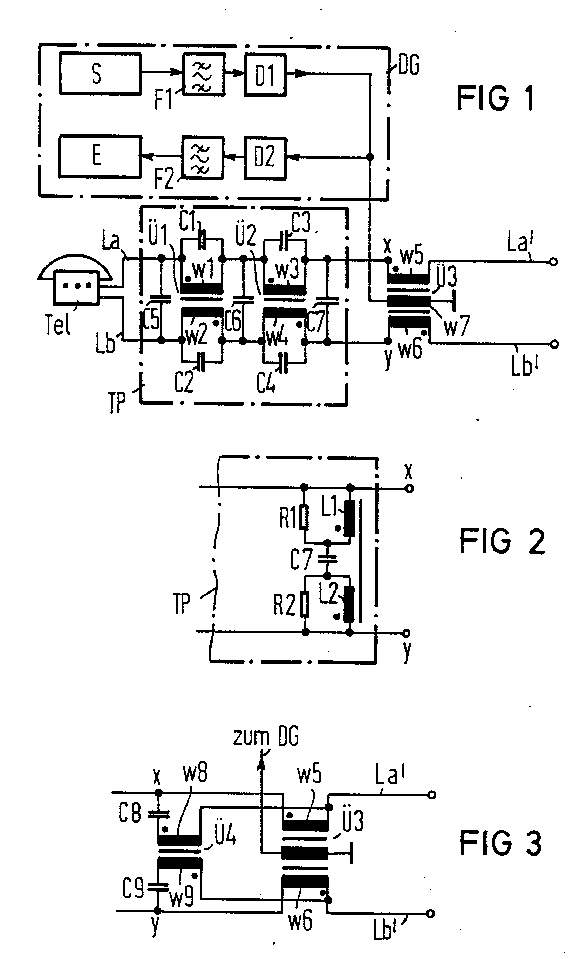

In FIG 1 ist in einem Blockdiagramm eine Schaltungsanordnung gemäß der Erfindung gezeigt. Zu dieser Schaltungsanordnung gehören eine Fernsprecheinrichtung Tel, bei der es sich um eine übliche Fernsprechstation handeln kann, und ein Datengerät DG, welches Datensignale abzugeben und aufzunehmen imstande ist.

Die Fernsprecheinrichtung Tel ist über die Adern La, Lb einer Anschluß-bzw. Übertragungsleitung mit einem Tiefpaßfilter TP verbunden, welches in nachstehend noch näher zu beschreibender Weise mit den Adern La' bzw. Lb' einer Übertragungsleitung verbunden ist. Das Tiefpaßfilter TP weist zwei jeweils als Spule mit einem einzigen Kern ausgeführte Übertrager Ü1 und Ü2 auf, die jeweils zwei Wicklungen w1, w2 bzw. w3, w4 aufweisen, von denen die jeweils einen Wicklungen direkt miteinander verbunden sind, nämlich die Wicklungen w1, w3 und die Wicklungen w2, w4. Den Wicklungen w1 bis w4 ist jeweils ein Kondensator der Kondensatoren C1, C2, C3, C4 parallel geschaltet. Auf der der Fernsprecheinrichtung zugewandten Seite weist das Tiefpaßfilter TP einen zwischen den beiden Leitungsadern La, Lb liegenden Kondensator C5 auf,der ggfs. auch entbehrlich ist. Zwischen den Verbindungen der Wicklungen w1, w3 und w2, w4 liegt ein Kondensator C6. Auf der den Übertragungsleitungsadern La', Lb' zugewandten Seite weist das Tiefpaßfilter TP einen Kondensator C7 auf, der -von der Fernsprecheinrichtung Tel aus betrachtet -als kapazitiver Abschluß des Tiefpaßfilters TP anzusehen ist.

In die beiden Übertragungsleitungsadern La', Lb' ist gemäß FIG 1 ein symmetrisch ausgebildeter, als Spule mit einem einzigen Kern ausgeführter Leitungsübertrager Ü3 mit zwei Wicklungen w5, w6 eingefügt. Der Leitungsübertrager Ü3 weist noch eine Übertragerwicklung w7 auf, deren eines Ende auf einem definierten Potential, wie Masse-bzw. Erdpotential liegt und deren anderes Ende mit dem Datengerät DG verbunden ist.

Das Datengerät DG weist im vorliegenden Fall einen Datensignalsender S und einen Datensignalempfänger E auf. Der Datensignalsender S ist ausgangsseitig über ein Filter F1, bei dem es sich um ein Bandpaßfilter handeln kann, und ggfs. über eine Dämpfungseinrichtung D1 -die einstellbar sein kann -mit dem erwähnten Wicklungsende der Übertragerwicklung w7 verbunden. Der Datensignalempfänger E ist eingangsseitig über eine Filteranordnung F2, bei der es sich um ein Bandpaßfilter handeln kann, und ggfs. über eine Dämpfungseinrichtung D2 -die ebenfalls gegebenenfalls .einstellbar sein kann -an dem gerade erwähnten Wicklungsende der Übertragerwicklung w7 angeschlossen. Die beiden Filter bzw. Filteranordnungen F1, F2 sind so ausgelegt, daß ihre in verschiedenen Frequenzbereichen liegenden Durchlaßfrequenzbänder oberhalb des Durchlaßbandes des Tiefpaßfilters TP liegen. Dies bedeutet, daß die Übertragung der Fernsprechsignale über das Tiefpaßfilter TP in einem ersten Frequenzbereich von beispielsweise 0,3 bis 3,4 kHz erfolgt und daß die Datensignalübertragung in einem zweiten, oberen Frequenzbereich von beispielsweise 50 bis 100 kHz erfolgt. In dem Fall, daß das Datengerät DG ein Modem ist, spricht man von einem sogenannten Data-Over-Voice-Modem.

Bei der vorstehend betrachteten, in FIG 1 dargestellten Schaltungsanordnung ist das Tiefpaßfilter TP mit seinem durch den Kondensator C7 gebildeten kapazitiven Abschluß vorzugsweise so bemessen, daß dessen Wechselstromwiderstand kleiner ist als der Wellenwiderstand des Datengeräts DG in dem genannten zweiten Frequenzband bzw. Frequenzbereich. Es sei hier angemerkt, daß der Wechselstromwiderstand des kapazitiven Abschlusses aber auch so bemessen sein kann, daß er in der Größenordnung des gerade erwähnten Wellenwiderstandes liegt. Wenn man ferner berücksichtigt, daß das Datengerät DG eingangsseitig bzw. ausgangsseitig an den Wellenwiderstand der Übertragungsleitung La', Lb' für die Übertragung von Datensignalen ebenso angepaßt sein soll bzw. ist wie das Fernsprechgerät Tel bzw. das Tiefpaßfilter TP an den Wellenwiderstand der betreffenden Übertragungsleitung für die Übertragung von Fernsprechsignalen, so ergibt sich, daß die Datensignale -die lediglich über die Wicklungen w5, w6 und den Kondensator C7 gelangen, praktisch ohne eine nennenswerte Dämpfung zu dem Datengerät DG hin bzw. von diesem weg abgegeben werden können. Bezüglich der Fernsprechsignale ist die Situation zwar so, daß in Reihe zu dem Tiefpaßfilter TP der Leitungsübertrager Ü3 liegt; die Widerstandsverhältnisse sind jedoch hier noch als relativ günstig anzusehen, so daß die Fernsprechsignale ebenfalls praktisch kaum gedämpft werden. Als übliche Werte für die erwähnten Wellenwiderstände bzw. Eingangs-bzw. Ausgangswiderstände der Einrichtungen können folgende Werte berücksichtigt werden: Der Wellenwider stand der Übertragungsleitung La', Lb' für die Übertragung von Fernsprechsignalen liegt bei 600 Ohm; der Wellenwiderstand der betreffenden Übertragungsleitung La', Lb' für die Übertragung von Datensignalen in dem betrachteten zweiten Frequenzbereich bzw.-band liegt bei 150 Ohm.

In FIG 2 ist eine Modifikation des in FIG 1 dargestellten Tiefpaßfilters TP angedeutet. Die in FIG 2 im rechten Teil angegeben Schaltungspunkte x und y stimmen mit den in FIG 1 entsprechend bezeichneten Schaltungspunkten x bzw. y überein. Wie aus FIG 2 hervorgeht, liegt in Reihe zu dem Kondensator C7 eine aus zwei Spulen L1, L2 bestehende Induktanz, deren Induktivität zusammen mit der Kapazität des Kondensators C7 eine Serienresonanzfrequenz festlegt, die in die Mitte des Datenübertragungsfrequenzbereiches gelegt ist, und durch die eine hinreichend kleine Ausgangsimpedanz des in FIG 2 gezeigten Tiefpaßfilters erreicht ist. Durch die den Spulen 11, 12 parallel geschalteten Widerstände R1, R2 läßt sich eine gewünschte Breitbandigkeit des betrachteten Serienresonanzkreises erreichen.

In FIG 3 ist eine weitere Modifikation der in FIG 1 dargestellten Schaltungsanordnung gezeigt. Gemäß FIG 3 sind den Wicklungen w5, w6 des Leitungsübertragers Ü3 Reihenschwingkreise parallel geschaltet, bestehend aus den Windungen w8 bzw. w9 eines weiteren, als Spule mit einem einzigen Kern ausgeführten Übertragers Ü4 und aus Kondensatoren C8, C9. Diese Reihenschwingkreise liegen zwischen den Leitungsübertragungsadern La' bzw. Lb'und den Schaltungspunkten x bzw. y. Die betreffenden Reihenschwingkreise sind so bemessen, daß sie bei bestimmten Frequenzen in Resonanz sind, die von bzw. zu der Fernsprecheinrichtung Tel gemäß FIG 1 zu übertragen sind, wie beispielsweise 16-kHz-Gebührenzählsignale. Durch die erwähnten Reihenschwingkereise können somit die erwähnten Sondersignale mit noch geringerer Dämpfung als bei der in FIG 1 gezeigten Schaltungsanordnung zu bzw. von der Fernsprecheinrichtung Tel übertragen werden. Zugleich ist durch die betreffenden Reihenschwingkreise eine Erhöhung der Sperrdämpfung im Datensignalkanal für die erwähnten Sondersignale erreicht.

Abschließend sei noch angemerkt, daß die in den Zeichnungen bei den einzelnen Wicklungen der Übertrager vorgesehenen Punkte den Wicklungssinn der jeweiligen Wicklung angeben.

Bezugszeichenliste

C1, C2, C3, C4, C5, C6, C7, C8, C9.Kondensator
D1, D2 .......................... Dämpfungseinrichtung
DG.............................. Datengerät
E................................ Datensignalempfänger
F1............................... Filter
F2............................... Filteranordnung
La, Lb, La', Lb'.................. Ader einer Übertragungsleitung
L1, L2,.......................... Spule
TP............................... Tiefpaßfilter
S................................ Datensignalsender
Tel.............................. Fernsprecheinrichtung
R1, R2........................... Widerstand
Ü1, Ü2, Ü4.............. Übertrager
Ü3.............................. Leitungsübertrager
w1, w2, w3, w4, w5, w6, w8, w9... Wicklung
w7.............................. Übertragerwicklung
x, y............................. Schaltungspunkt

## Ansprüche

1. Schaltungsanordnung zum Anschließen eines Datensignale abgebenden und/oder aufnehmenden Datengerätes (DG) an eine mit einer Fernsprecheinrichtung (Tel) verbundene Übertragungsleitung (La', Lb'), über die Fernsprechsignale in einem ersten Frequenzbereich und Datensignale in einem frequenzmäßig darüber liegenden zweiten Frequenzbereich übertragen werden und mit der die Fernsprecheinrichtung (Tel) und das Datengerät (DG) über eine Filteranordnung (TP) verbunden sind, zu der ein in der Übertragungsleitung (La', Lb') liegendes Tiefpaßfilter gehört,

wobei die Übertragungsleitung (La', Lb') für die Übertragung der Fernsprechsignale einen ersten, relativ hohen Wellenwiderstand und für die Übertragung der Datensignale einen demgegenüber niedrigeren, zweiten Wellenwiderstand aufweist,

wobei das Tiefpaßfilter (TP) so ausgebildet ist, daß es auf derjenigen, mit der Übertragungsleitung (La', Lb') verbundenen Seite, welche der mit der Fernsprecheinrichtung (Tel) verbundenen Seite gegenüberliegt, mit einem kapazitiven Abschluß (C7) versehen ist,

und wobei in die Übertragungsleitung ein Leitungsübertrager (Ü3) eingefügt ist, der über wenigstens eine Übertragerwicklung (w7) als Koppelwicklung mit dem Datengerät (DG) gekoppelt ist,

dadurch gekennzeichnet, daß der Leitungsübertrager (Ü3) mit seiner jeweiligen Koppelwicklung (w7) direkt mit dem Datengerät (DG) verbunden ist, und daß der kapazitive Abschluß (C7) des Tiefpaßfilters (TP) so bemessen ist, daß dessen Wechselstromwiderstand in der Größenordnung des Wellenwiderstandes der Übertragungsleitung in dem genannten zweiten Frequenzbereich liegt, vorzugsweise jedoch kleiner ist als dieser Wellenwiderstand.

2. Schaltungsanordnung nach Anspruch 1, dadurch geknnzeichnet, daß der Leitungsübertrager (Ü3) als symmetrischer Leitungsübertrager (Ü3) ausgebildet ist.

3. Schaltungsanordnung nach 1 oder 2, dadurch gekennzeichnet , daß der Leitungsübertrager (Ü3) als Teil einer Gabelschaltung ausgebildet ist, mit der ein Datensignalsender (S) und ein Datensignalempfänger (E) des Datengerätes (DG) verbunden ist.

4. Schaltungsanordnung nach einem der Ansprüche 1 bis 3, dadurch gekennzeichnet, daß mit zumindest einem Teil des kapazitiven Abschlusses (C7) des Tiefpaßfilters (TP) eine Induktanz (L1, L2) in Reihe geschaltet ist.

5. Schaltungsanordnung nach Anspruch 4, dadurch gekennzeichnet, daß der Induktanz (L1, L2) eine ohmsche Widerstandsanordnung (R1, R2) parallel geschaltet ist.

6. Schaltungsanordnung nach einem der Ansprüche 1 bis 5, dadurch gekennzeichnet, daß der in der jeweiligen Übertragungsleitungsader (La', Lb') liegenden Wicklung (w5, w6) des Leitungsübertragers (Ü3) ein Reihenschwingkreis (w8, C8; w9, C9) parallel geschaltet ist, der auf eine Frequenz abgestimmt ist, mit der zur Fernsprecheinrichtung (Tel) hin zu übertragende Sondersignale auftreten.

FIG 1

FIG 2

FIG 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,X | EP-A-0 062 442 (NORTHERN TELECOM) * Seite 7, Zeile 26 - Seite 10, Zeile 2; Seite 11, Zeilen 13-25; Seite 14, Zeile 26 - Seite 15, Zeile 17 * | 1-4 | H 04 M 11/06 |
| A | | 5,6 | |
| | --- | | |
| D,X | EP-A-0 146 894 (FUJITSU) * Seite 6, Zeile 32 - Seite 7, Zeile 32; Seite 9, Zeilen 16-21 * | 1-3 | |
| | --- | | |
| A | DE-B-2 337 107 (SIEMENS) * Spalte 4, Zeilen 45-59 * | 6 | |
| | ----- | | |

RECHERCHIERTE SACHGEBIETE (Int. Cl.4)

H 04 M

Der vorliegende Recherchenbericht wurde für alle Patentansprüche erstellt.

| Recherchenort | Abschlußdatum der Recherche | Prüfer |
|---|---|---|
| DEN HAAG | 26-11-1986 | MIKKELSEN C. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82